# FASCICULE DE BREVET EUROPEEN

(11) **EP 2 494 105 B1**
(45) Date de publication et mention de la délivrance du brevet: **12.08.2015**
(21) Numéro de dépôt: 10776620.6
(22) Date de dépôt: 25.10.2010
(51) Int. Cl.: D07B 1/06, D07B 1/16, C09D 125/08, B32B 5/28, D02G 3/48

(54) **RENFORT COMPOSITE AUTO-ADHERENT**
SELBSTKLEBENDE VERBUNDSTOFFVERSTÄRKUNG
SELF-ADHESIVE COMPOSITE REINFORCEMENT

(30) Priorité: 29.10.2009 FR 0957609
(43) Date de publication de la demande: 05.09.2012
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: ABAD, Vincent, F-63400 Chamalieres (FR); RIGO, Sébastien, F-63410 Manzat (FR); CHOUVEL, Christophe, F-63400 Chamalieres (FR)
(74) Mandataire: Ribière, Joel
(86) Numéro de dépôt international: PCT/EP2010/066020
(87) Numéro de publication internationale: WO 2011/051204

(56) Documents cités:
- EP-A1- 2 070 952
- FR-A1- 2 576 247
- JP-A- 2002 201 577
- JP-A- 2004 211 261
- US-A1- 2007 066 740

## Description

### DOMAINE DE L'INVENTION

Le domaine de la présente invention est celui des éléments de renforcement ou « renforts », notamment métalliques, utilisables pour renforcer des articles ou produits semi-finis en caoutchouc diène tels que par exemple des bandages pneumatiques.

La présente invention est plus particulièrement relative à des renforts de type hybride ou composite constitués d'au moins une âme, en particulier métallique, ladite âme étant gainée ou recouverte d'une ou plusieurs couches de matière thermoplastique.

### ETAT DE LA TECHNIQUE

Le gainage de renforts métalliques par des matières thermoplastiques tels que par exemple polyamide ou polyester est connu depuis fort longtemps, notamment afin de protéger ces renforts contre diverses agressions externes tels qu'oxydation ou abrasion, ou encore en vue de rigidifier structurellement, solidariser entre eux divers ensembles de fils ou assemblages de fils tels que des câbles, et ainsi augmenter notamment leur résistance au flambage.

De tels renforts composites, ainsi que leur utilisation dans des articles en caoutchouc tels que des bandages pneumatiques, ont été décrits dans de nombreux documents brevet.

La demande de brevet EP 0 962 562 a décrit par exemple un renfort en acier ou en textile aramide gainé par une matière thermoplastique telle que polyester ou polyamide, en vue d'améliorer sa résistance à l'abrasion.

La demande de brevet FR 2 601 293 a décrit le gainage d'un câble métallique avec du polyamide pour l'utiliser comme tringle dans un bourrelet de bandage pneumatique, ce gainage permettant avantageusement d'adapter la forme de cette tringle à la structure et aux conditions de fonctionnement du bourrelet du bandage pneumatique qu'elle renforce.

Les documents brevet FR 2 576 247 ou US 4 754 794 ont également décrit des fils ou câbles métalliques doublement voire triplement gainés par deux, respectivement trois matières thermoplastiques différentes (e.g. polyamides) ayant des températures de fusion différentes, en vue d'une part de contrôler la distance entre ces fils ou câbles, d'autre part de supprimer les risques d'usure par frottement ou de corrosion, pour les utiliser comme tringle dans un bourrelet de bandage pneumatique.

Ces renforts ainsi gainés de matière polyester ou polyamide présentent, outre les avantages précités de résistance à la corrosion, de résistance à l'abrasion et de rigidité structurelle, celui non négligeable de pouvoir être ensuite collés à des matrices de caoutchouc diénique en utilisant de simples colles textiles dites "RFL" (résorcinol-formaldéhyde-latex) comportant au moins un élastomère diénique tel que du caoutchouc naturel, colles qui de manière connue confèrent une adhésion satisfaisante entre des fibres textiles tels que fibres en polyester ou polyamide et un caoutchouc diénique.

Ainsi, peuvent être utilisés avantageusement des renforts métalliques non revêtus de couches métalliques adhésives tels que laiton, ainsi que des matrices de caoutchouc environnantes dépourvues de sels métalliques tels que sels de cobalt, nécessaires de manière connue au maintien des performances adhésives au cours du temps mais augmentant significativement d'une part le coût des matrices de caoutchouc elles-mêmes, d'autre part leur sensibilité à l'oxydation et au vieillissement (voir par exemple demande WO 2005/113666).

Toutefois, les colles RFL ci-dessus ne sont pas dépourvues d'inconvénient ; elles comportent en particulier comme substance de base le formaldéhyde (ou formol) qu'il est souhaitable de supprimer à terme des compositions adhésives, en raison de l'évolution récente de la réglementation européenne sur ce type de produit.
Le document JP2004211261 décrit, dans le domaine technique des bétons précontraints, l'utilisation de câbles métalliques gainés d'une couche d'une résine thermoplastique comprenant une résine poly(p-phénylène éther) modifiée.

Ainsi, les concepteurs d'articles en caoutchouc diénique, notamment les manufacturiers de bandages pneumatiques ont pour objectif aujourd'hui de trouver de nouveaux systèmes adhésifs ou de nouveaux renforts qui permettent de pallier tout ou partie des inconvénients précités.

### BREVE DESCRIPTION DE L'INVENTION

Or, au cours de leurs recherches, les Demanderesses ont découvert un renfort composite nouveau, susceptible d'adhérer directement au caoutchouc, qui permet de répondre à l'objectif ci-dessus.

En conséquence, un premier objet de l'invention concerne un renfort composite comportant :
- un fil ou plusieurs fil(s) de renforcement ;
- recouvrant individuellement ledit fil, chaque fil ou collectivement plusieurs fils, une première couche d'un polymère thermoplastique dont la température de transition vitreuse est positive ;
- recouvrant la première couche, une deuxième couche d'une composition comportant un poly(p-phénylène éther) ("PPE") et un élastomère thermoplastique styrénique ("TPS") insaturé fonctionnalisé, dont la température de transition vitreuse est négative, ledit élastomère étant porteur de groupes fonctionnels choisis parmi les groupes époxyde, carboxyle, anhydride ou ester d'acide.

On a constaté de manière inattendue que la présence de cette composition élastomère thermoplastique permettait d'assurer une adhésion directe et performante du renfort composite de l'invention à une matrice ou composition d'élastomère diénique telle que celles couramment utilisées dans des bandages pneumatiques.

L'invention concerne également un procédé de fabrication d'un renfort composite, ledit procédé comportant au moins les étapes suivantes :
- on recouvre un fil ou plusieurs fil(s) de renforcement par une couche du polymère thermoplastique dont la température de transition vitreuse est positive ;
- on dépose individuellement sur ledit fil, chaque fil ou collectivement sur plusieurs fils ainsi recouvert(s) une deuxième couche de composition comportant un poly(p-phénylène éther) ("PPE") et un élastomère thermoplastique styrénique ("TPS") insaturé fonctionnalisé, dont la température de transition vitreuse est négative, ledit élastomère étant porteur de groupes fonctionnels choisis parmi les groupes époxyde, carboxyle, anhydride ou ester d'acide ;
- on soumet l'ensemble à un traitement thermo-oxydant pour solidariser les deux couches.

La présente invention concerne également l'utilisation du renfort composite de l'invention comme élément de renforcement d'articles ou produits semi-finis en caoutchouc, particulièrement de bandages pneumatiques, notamment ceux destinés à équiper des véhicules à moteur de type tourisme, SUV (*"Sport Utility Vehicles*"), deux roues (notamment vélos, motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

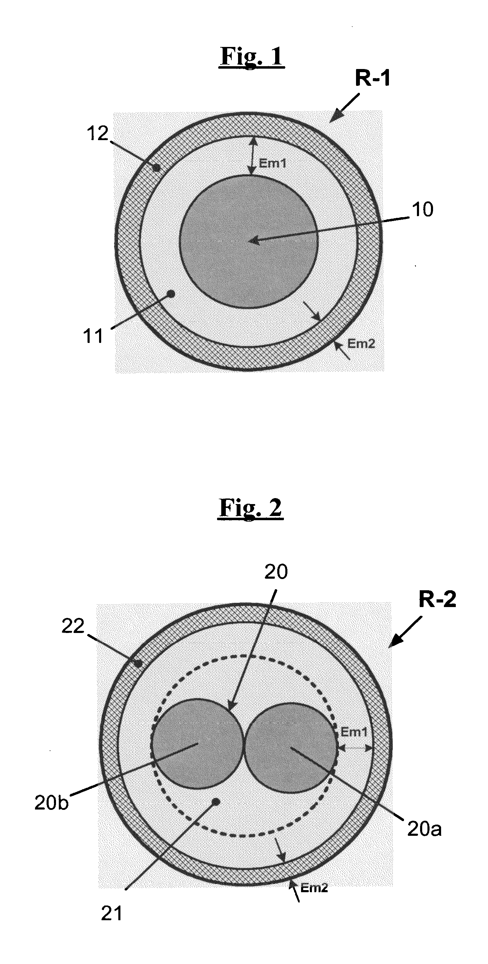

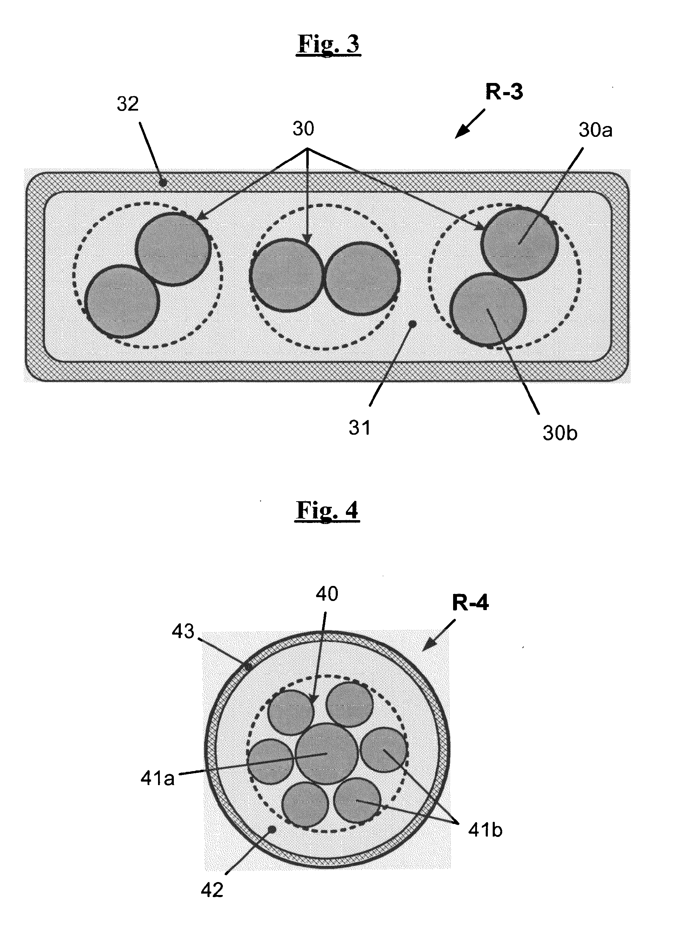

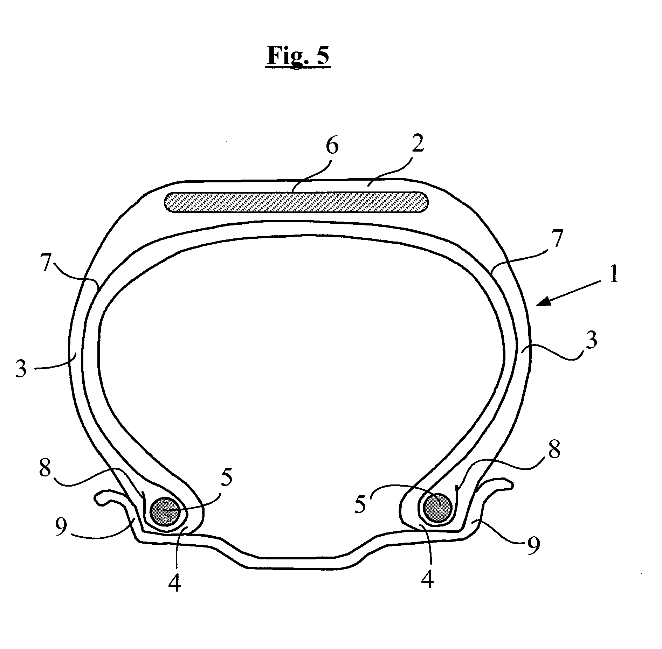

L'invention concerne également en soi tout article ou produit semi-fini en caoutchouc, en particulier tout bandage pneumatique, comportant un renfort composite selon l'invention. L'invention ainsi que ses avantages seront aisément compris à la lumière de la description et des exemples de réalisation qui suivent, ainsi que des figures relatives à ces exemples qui schématisent :
- en coupe transversale, un exemple d'un renfort composite selon l'invention (Fig. 1) ;
- en coupe transversale, un autre exemple d'un renfort conforme à l'invention (Fig. 2) ;
- en coupe transversale, un autre exemple d'un renfort conforme à l'invention (Fig. 3) ;
- en coupe transversale, un autre exemple d'un renfort conforme à l'invention (Fig. 4) ;
- en coupe radiale, un bandage pneumatique à armature de carcasse radiale conforme à l'invention, incorporant un renfort composite selon l'invention (Fig. 5).

### DESCRIPTION DETAILLEE DE L'INVENTION

Dans la présente description, sauf indication expresse différente, tous les pourcentages (%) indiqués sont des % en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Le renfort composite de l'invention, susceptible d'adhérer directement à une composition de caoutchouc insaturé et utilisable notamment pour le renforcement d'articles en caoutchouc diène tels que des bandages pneumatiques, a donc pour caractéristique de comporter :
- au moins un fil (c'est-à-dire un ou plusieurs fils) de renforcement ;
- recouvrant individuellement ledit fil, chaque fil ou collectivement plusieurs fils, une première couche d'un polymère thermoplastique dont la température de transition vitreuse (notée ci-après Tg₁) est positive (c'est-à-dire supérieure à 0°C);
- recouvrant ladite première couche, une deuxième couche d'une composition comportant au moins un poly(p-phénylène éther) (en abrégé "PPE") et un élastomère thermoplastique styrénique (en abrégé "TPS") du type insaturé et fonctionnalisé, dont la température de transition vitreuse (notée ci-après Tg₂) est négative (c'est-à-dire inférieure à 0°C), ledit élastomère étant porteur de groupes fonctionnels choisis parmi les groupes époxyde, carboxyle, anhydride ou ester d'acide.

En d'autres termes, le renfort composite de l'invention comporte un seul fil ou plusieurs fils de renforcement, chaque fil de renforcement étant recouvert (à titre individuel ou collectivement) par deux couches de polymères thermoplastiques distinctes et superposées. La structure du renfort de l'invention est décrite en détail ci-après.

Dans la présente demande, on entend de manière générale par fil de renforcement ("*reinforcing thread*") tout élément longiligne de grande longueur relativement à sa section transversale, quelle que soit la forme de cette dernière, par exemple circulaire, oblongue, rectangulaire ou carrée, ou même plate, ce fil pouvant être rectiligne comme non rectiligne, par exemple torsadé, ou ondulé.

Ce fil de renforcement peut prendre tout forme connue, il peut d'agir par exemple d'un mono filament élémentaire de diamètre important (par exemple et de préférence égal ou supérieur à 50 µm), d'un ruban élémentaire, d'une fibre multifilamentaire (constituée d'une pluralité de filaments élémentaires de faible diamètre, typiquement inférieur à 30 µm), d'un retors textile formé de plusieurs fibres retordues ensemble, d'un câble textile ou métallique formé de plusieurs fibres ou monofilaments câblés ou retordus ensemble, ou encore d'un assemblage, une rangée de fils tels que par exemple une bande ou bandelette comportant plusieurs de ces monofilaments, fibres, retors ou câbles regroupés ensemble, par exemple alignés selon une direction principale, rectiligne ou pas.

Le fil ou chaque fil de renforcement a un diamètre qui est préférentiellement inférieur à 5 mm, notamment compris dans un domaine de 0,1 à 2 mm.

De préférence, le fil de renforcement est un fil de renforcement métallique, notamment en acier au carbone tel que ceux utilisés dans les câbles type *"steel cords"* pour pneumatiques ; mais il est bien entendu possible d'utiliser d'autres aciers, par exemple des aciers inoxydables. Lorsqu'un acier au carbone est utilisé, sa teneur en carbone est de préférence comprise entre 0,4% et 1,2%, notamment entre 0,5% et 1,1%. L'invention s'applique en particulier à tout acier du type *steel cord* à résistance standard (dit "NT" pour *" Normal Tensile* "), à haute résistance (dit "HT" pour *"High Tensile* "), à très haute résistance (dit "SHT" pour " *Super High Tensile* ") comme à ultra-haute résistance (dit "UHT" pour *"Ultra High Tensile* ").

L'acier pourrait être revêtu d'une couche adhésive telle que du laiton ou du zinc. Toutefois, on peut aussi utiliser un acier clair, c'est-à-dire non revêtu. En outre, grâce à l'invention, la composition de caoutchouc destinée à être renforcée par un renfort métallique selon l'invention ne nécessite plus l'emploi dans sa formulation de sels métalliques tels que des sels de cobalt.

La première couche ou gaine recouvrant le ou chaque fil de renforcement est constituée par un polymère thermoplastique dont la Tg (Tg₁) est par définition positive, de préférence supérieure à +20°C, plus préférentiellement supérieure à +30°C. D'autre part, la température de fusion ("Tf") de ce polymère thermoplastique est préférentiellement supérieure à 100°C, plus préférentiellement supérieure à 150°C, notamment supérieure à 200°C.

Ce polymère thermoplastique est choisi préférentiellement dans le groupe constitué par les polyamides, les polyesters et les polyimides, plus particulièrement dans le groupe constitué par les polyamides aliphatiques et les polyesters. Parmi les polyesters, on peut citer par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate). Parmi les polyamides aliphatiques, on peut citer notamment les polyamides 4-6, 6, 6-6, 11 ou 12. Ce polymère thermoplastique est préférentiellement un polyamide aliphatique, plus préférentiellement un polyamide 6-6 (ou Nylon® 6-6).

La deuxième couche ou gaine recouvrant la première couche est constituée d'une composition comportant tout d'abord un élastomère thermoplastique styrénique insaturé fonctionnalisé, ledit élastomère étant porteur de groupes ou fonctions époxyde, carboxyle, anhydride d'acide ou ester d'acide.

Préférentiellement, les groupes fonctionnels sont des groupes époxydes, c'est-à-dire que l'élastomère thermoplastique est un élastomère époxydé.

La Tg (Tg₂) dudit élastomère est par définition négative, de préférence inférieure à - 20°C, plus préférentiellement inférieure à - 30°C.

Ainsi et selon un mode de réalisation préférentiel de l'invention, l'écart des températures de transition vitreuse (Tg₁ - Tg₂) entre le polymère thermoplastique de la première couche et l'élastomère TPS insaturé de la deuxième couche est supérieur à 40°C, plus préférentiellement supérieur à 60°C.

On rappellera ici que les élastomères thermoplastiques styréniques (en abrégé "TPS") sont des élastomères thermoplastiques se présentant sous la forme de copolymères blocs à base de styrène. De structure intermédiaire entre polymères thermoplastiques et élastomères, ils sont constitués de manière connue de séquences rigides polystyrène reliées par des séquences souples élastomère, par exemple polybutadiène, polyisoprène ou poly(éthylène/butylène).

C'est la raison pour laquelle, de manière connue, les copolymères TPS se caractérisent généralement par la présence de deux pics de transition vitreuse, le premier pic (température la plus basse, négative, correspondant à Tg₂) étant relatif à la séquence élastomère du copolymère TPS, le second pic (température la plus haute, positive, typiquement aux alentours de 80°C ou plus) étant relatif à la partie thermoplastique (blocs styrène) du copolymère TPS.

Ces élastomères TPS sont souvent des élastomères triblocs avec deux segments rigides reliés par un segment souple. Les segments rigides et souples peuvent être disposés linéairement, en étoile ou branchés. Ces élastomères TPS peuvent être aussi des élastomères diblocs avec un seul segment rigide relié à un segment souple. Typiquement, chacun de ces segments ou blocs contient au minimum plus de 5, généralement plus de 10 unités de base (par exemple unités styrène et unités isoprène pour un copolymère blocs styrène/ isoprène/ styrène).

Par styrène, doit être entendu dans la présente description tout monomère à base de styrène, non substitué comme substitué ; parmi les styrènes substitués peuvent être cités par exemple les méthylstyrènes (par exemple α-méthylstyrène, β-méthylstyrène, *p*-méthylstyrène, *tert-*butylstyrène) les chlorostyrènes (par exemple monochlorostyrène, dichlorostyrène).

Ceci étant rappelé, une caractéristique essentielle de l'élastomère TPS utilisé dans le renfort composite de l'invention est qu'il est insaturé. Par élastomère TPS insaturé, on entend par définition et de manière bien connue un élastomère TPS qui est pourvu d'insaturations éthyléniques, c'est-à-dire qui comporte des doubles liaisons carbone-carbone (conjuguées ou non) ; réciproquement, un élastomère TPS dit saturé est bien entendu un élastomère TPS qui est dépourvu de telles doubles liaisons.

Une deuxième caractéristique essentielle de l'élastomère TPS utilisé dans le renfort composite de l'invention est qu'il est fonctionnalisé, porteur de groupes fonctionnels choisis parmi les groupes ou fonctions époxyde, carboxyle, anhydride ou ester d'acide. Selon un mode de réalisation particulièrement préférentiel, cet élastomère TPS est un élastomère époxydé, c'est-à-dire porteur d'un ou plusieurs groupes époxydes.

De préférence, l'élastomère insaturé est un copolymère comportant des blocs styrène (c'est-à-dire polystyrène) et des blocs diène (c'est-à-dire polydiène), notamment des blocs isoprène (polyisoprène) ou butadiène (polybutadiène) ; un tel élastomère est choisi en particulier dans le groupe constitué par les copolymères blocs styrène/ butadiène (SB), styrène/ isoprène (SI), styrène/ butadiène/ butylène (SBB), styrène/ butadiène/ isoprène (SBI), styrène/ butadiène/ styrène (SBS), styrène/ butadiène/ butylène/ styrène (SBBS), styrène/ isoprène/ styrène (SIS), styrène/ butadiène/ isoprène/ styrène (SBIS) et les mélanges de ces copolymères.

Plus préférentiellement, cet élastomère insaturé est un copolymère du type dibloc ou tribloc choisi dans le groupe constitué par les copolymères blocs styrène/ butadiène (SB), styrène/ butadiène/ styrène (SBS), styrène/ isoprène (SI), styrène/ isoprène/ styrène (SIS) et les mélanges de ces copolymères.

Des élastomères TPS insaturés à blocs styrène et blocs diène ont par exemple été décrits dans les demandes de brevet WO 2008/080557, WO 2008/145276, WO 2008/145277, WO 2008/154996, WO 2009/007064, utilisés dans des compositions étanches à l'air ou auto-obturantes destinées notamment à des bandages pneumatiques.

Selon un autre mode de réalisation préférentiel de l'invention, le taux de styrène, dans l'élastomère TPS insaturé est compris entre 5 et 50%. En dehors du domaine indiqué, il existe un risque de voir l'effet technique visé, à savoir un compromis d'adhésion qui n'est plus optimal vis-à-vis d'une part de la couche du polymère thermoplastique, d'autre part de l'élastomère diénique auquel est destiné le renfort. Pour ces raisons, le taux de styrène est plus préférentiellement compris entre 10 et 40%.

La masse moléculaire moyenne en nombre (notée Mn) de l'élastomère TPS est préférentiellement comprise entre 5 000 et 500 000 g/mol, plus préférentiellement comprise entre 7 000 et 450 000.

Des élastomères TPS insaturés et époxydés, tels que par exemple SBS, sont connus et disponibles commercialement, par exemple auprès de la société Daicel sous la dénomination "Epofriend".

Ensuite, la composition de la deuxième couche a pour autre caractéristique essentielle de comporter, en combinaison avec l'élastomère TPS insaturé précédemment décrit, au moins un polymère de poly(p-phénylène éther) (ou poly(1,4-phénylène-éther)) (noté en abrégé "PPE").

Les polymères thermoplastiques PPE sont bien connus de l'homme du métier, ce sont des résines solides à température ambiante (20°C) compatibles avec les polymères styréniques, qui ont notamment utilisées pour augmenter la Tg d'élastomères TPS (voir par exemple *"*Thermal, Mechanical and Morphological Analyses of Poly(2,6-dimethyl-1,4-phenylene oxide)/Styrene-Butadiene-Styrene Blends", Tucker, Barlow and Paul, Macromolecules, 1988, 21, 1678-1685).

Préférentiellement, le PPE utilisé ici possède une température de transition vitreuse (notée ci-après Tg₃) qui est supérieure à 150°C, plus préférentiellement supérieure à 180°C. Quant à sa masse moléculaire moyenne en nombre (Mn), elle est préférentiellement comprise entre 5 000 et 100 000 g/mol.

La masse moléculaire moyenne en nombre (Mn) est déterminée de manière connue, par chromatographie d'exclusion stérique (SEC). L'échantillon est préalablement solubilisé dans du tétrahydrofuranne à une concentration d'environ 1 g/l; puis la solution est filtrée sur filtre de porosité 0,45 µm avant injection. L'appareillage utilisé est une chaîne chromatographique "WATERS alliance". Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales "STYRAGEL" ("HMW7", "HMW6E" et deux "HT6E"). Le volume injecté de la solution de l'échantillon de polymère est de 100 µl Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

A titres d'exemples non limitatifs de polymères PPE utilisables dans le renfort composite de l'invention, on peut citer notamment ceux choisis dans le groupe constitué par les poly(2,6-diméthyl-1,4-phénylène-éther), poly(2,6-diméthyl-co-2,3,6-triméthyl-1,4-phénylène-éther), poly-(2,3,6-triméthyl-1,4-phénylène-éther), poly(2,6-diéthyl-1,4-phénylène-éther), poly(2-méthyl-6-éthyl-1,4-phénylène-éther), poly(2-méthyl-6-propyl-1,4-phénylène-éther), poly-(2,6-dipropyl-1,4-phénylène-éther), poly(2-éthyl-6-propyl-1,4-phénylène-éther), poly(2,6-dilauryl-1,4-phénylène-éther), poly(2,6-diphényl-1,4-phénylène-éther), poly(2,6-diméthoxy-1,4-phénylène-éther), poly(1,6-diéthoxy-1,4-phénylène-éther), poly(2-méthoxy-6-éthoxy-1,4-phénylène-éther), poly(2-éthyl-6-stéaryloxy-1,4-phénylène-éther), poly(2,6-dichloro-1,4-phénylène-éther), poly(2-méthyl-6-phényl-1,4-phénylène-éther), poly(2-éthoxy-1,4-phénylène-éther), poly(2-chloro-1,4-phénylène-éther), poly(2,6-dibromo-1,4-phénylène-éther), poly(3-bromo-2,6-diméthyl-1,4-phénylène-éther), leurs copolymères respectifs, et les mélanges de ces homopolymères ou copolymères.

Selon un mode de réalisation particulier et préférentiel, le PPE utilisé est le poly(2,6-diméthyl-1,4-phénylène-éther) également dénommé parfois polyphénylène oxyde (ou, en abrégé, "PPO"). De tels PPE ou PPO commercialement disponibles sont par exemple les PPE de dénomination "Xyron S202" de la société Asahi Kasei, ou les PPE de dénomination "Noryl SA120" de la société Sabic.

De préférence, dans la composition formant la deuxième couche du renfort composite de l'invention, la quantité de polymère PPE est ajustée de telle manière que le taux pondéral de PPE soit compris entre 0,05 et 5 fois, plus préférentiellement entre 0,1 et 2 fois le taux pondéral de styrène présent dans l'élastomère TPS lui-même. En dessous des minima préconisés, l'adhésion du renfort composite au caoutchouc peut être diminuée alors qu'au-delà des maxima indiqués, il existe un risque de fragilité de la deuxième couche.

Pour toutes ces raisons, le taux pondéral de PPE est plus préférentiellement encore compris entre 0,2 et 1,5 fois le taux pondéral de styrène dans l'élastomère TPS.

La deuxième couche ou composition décrite ci-dessus peut comporter par ailleurs divers additifs, à des taux préférentiels inférieurs à 30%, plus préférentiellement à 20%, encore plus préférentiellement inférieur à 10% en poids par rapport à la quantité de PPE.

De tels additifs pourraient être par exemple des élastomères thermoplastiques autres que des TPS insaturés, par exemple des élastomères TPE ou encore des polymères thermoplastiques tels que ceux utilisés pour la première couche précédemment décrite, l'addition de ces élastomères ou polymères étant par exemple destinée à moduler les propriétés de rigidité de la deuxième couche afin notamment de réduire les gradients de rigidité pouvant exister entre les première et deuxième couches. De tels additifs pourraient être également des charges renforçantes telles que du noir de carbone ou de la silice, des charges non renforçantes ou inertes, des agents colorants utilisables pour la coloration de la composition, des plastifiants tels que des huiles, des agents de protection tels que antioxydants, antiozonants, anti-UV ou autres stabilisants.

La Tg des polymères thermoplastiques ci-dessus (Tg₁, Tg₂ et Tg₃) est mesurée de manière connue par DSC (*Differential Scanning Calorimetry*), par exemple et sauf indications différentes spécifiées dans la présente demande, selon la norme ASTM D3418 de 1999.

La figure 1 annexée représente de manière très schématique (sans respect d'une échelle spécifique), en coupe transversale, un premier exemple d'un renfort composite conforme à l'invention. Ce renfort composite noté R-1 est constitué d'un fil de renforcement (10) constitué d'un filament unitaire ou monofilament de diamètre relativement élevé (par exemple entre 0,10 et 0,50 mm), par exemple en acier au carbone, qui est recouvert d'une première couche (11) d'un polymère thermoplastique dont la Tg (Tg₁) est positive, par exemple en polyamide ou en polyester, dont l'épaisseur minimale est notée Eₘ₁ sur cette figure 1. Une deuxième couche (12) d'une composition comportant un PPE et un TPS insaturé fonctionnalisé, par exemple d'un SBS, SBBS, SIS ou SBIS du type époxydé, dont la Tg (Tg₂) est négative, vient recouvrir la première couche (11) ; son épaisseur minimale est notée Eₘ₂ sur la figure 1.

La figure 2 schématise en coupe transversale un deuxième exemple d'un renfort composite conforme à l'invention. Ce renfort composite noté R-2 est constitué d'un fil de renforcement (20) constitué en fait de deux filaments unitaires ou monofilaments (20a, 20b) de diamètre relativement élevé (par exemple entre 0,10 et 0,50 mm) retordus ou câblés ensemble, par exemple en acier au carbone ; le fil de renforcement (20) est recouvert d'une première couche (21) d'un polymère thermoplastique dont la Tg (Tg₁) est positive, par exemple en polyamide 6-6 ou en polyester, d'épaisseur minimale Eₘ₁. Une deuxième couche (22) d'une composition comportant un PPE et un élastomère TPS insaturé fonctionnalisé, par exemple d'un SBS ou SIS époxydé, dont la Tg (Tg₂) est négative, d'épaisseur minimale Eₘ₂ vient recouvrir la première couche (21).

La figure 3 schématise en coupe transversale un autre exemple de renfort composite selon l'invention. Ce renfort composite noté R-3 est constitué de trois fils de renforcement (30) constitués chacun de deux monofilaments (30a, 30b) de diamètre relativement élevé (par exemple entre 0,10 et 0,50 mm) retordus ou câblés ensemble, par exemple en acier au carbone ; l'ensemble constitué par les trois fils de renforcement (30) par exemple alignés est recouvert d'une première couche (31) d'un polymère thermoplastique dont la Tg (Tg₁) est positive, par exemple en polyamide ou en polyester. Une deuxième couche (32) d'une composition comportant un PPE et un élastomère TPS insaturé fonctionnalisé, par exemple d'un SBS, SBBS, SIS ou SBIS du type époxydé, dont la Tg (Tg₂) est négative, vient recouvrir la première couche (31).

La figure 4 schématise, toujours en coupe transversale, un autre exemple de renfort composite selon l'invention. Ce renfort composite R-4 comporte un fil de renforcement (40) consistant en un câble d'acier de construction 1+6, avec un fil central ou fil d'âme (41a) et six filaments (41b) de même diamètre enroulés ensemble en hélice autour du fil central. Ce câble ou fil de renforcement (40) est recouvert d'une première couche (42) d'un polyamide 6-6, elle-même recouverte d'une deuxième couche (43) d'une composition comportant un PPE et un élastomère SBS fonctionnalisé, par exemple époxydé.

Dans les renforts composites conformes à l'invention tels que ceux schématisés par exemple dans les figures 1 à 4 ci-dessus, l'épaisseur minimale des deux couches (Eₘ₁ et Eₘ₂) peut varier dans une très large mesure en fonction des conditions particulières de réalisation de l'invention.

L'épaisseur minimale Eₘ₁ de la première couche est de préférence comprise entre 1 µm et 2 mm, plus préférentiellement entre 10 µm et 1 mm.

Selon des modes de réalisation particuliers de l'invention, l'épaisseur minimale Eₘ₂ de la deuxième couche peut être du même ordre de grandeur que celle de la première couche (cas d'une deuxième couche épaisse d'une épaisseur comprise par exemple entre 1 µm et 2 mm, en particulier entre 10 µm et 1 mm), ou bien être notablement différente.

Selon un autre mode de réalisation particulier, la deuxième couche pourrait constituer par exemple une couche adhésive fine ou ultrafine, déposée par exemple non par extrusion mais par une technique d'enduction, par pulvérisation, ou autre technique de dépôt de film mince ou ultra-mince, par exemple d'épaisseur comprise entre 0,02 µm et 1 µm, en particulier entre 0,05 µm et 0,5 µm.

Dans le cas où plusieurs fils de renforcement sont utilisés, les première et deuxième couches peuvent être déposées individuellement sur chacun des fils de renforcement (pour rappel, que ces fils de renforcement soient unitaires ou pas), comme illustré par exemple aux figures 1, 2 et 4 commentées précédemment. Mais les première et deuxième couches peuvent être aussi déposées collectivement sur plusieurs des fils de renforcement disposés de manière appropriée, par exemple alignés selon une direction principale, comme illustré par exemple à la figure 3.

Le renfort composite de l'invention est susceptible d'être préparé selon un procédé spécifique comportant au moins les étapes suivantes :
- au cours d'une première étape, on soumet tout d'abord au moins un (c'est-à-dire un ou plusieurs) fil(s) de renforcement à un premier recouvrement par la première couche de polymère thermoplastique dont la température de transition vitreuse est positive ;
- puis, au cours d'une deuxième étape, on dépose sur le ou les fil(s) de renforcement ainsi recouvert(s) une deuxième couche de la composition comportant au moins le poly(p-phénylène éther) ("PPE") et l'élastomère thermoplastique styrénique ("TPS") insaturé fonctionnalisé dont la température de transition vitreuse est négative, ledit élastomère étant porteur de groupes fonctionnels choisis parmi les groupes époxyde, carboxyle, anhydride ou ester d'acide ;
- on soumet enfin l'ensemble à un traitement thermo-oxydant pour solidariser les deux couches.

Les deux premières étapes sont conduites de manière connue de l'homme du métier, par exemple en ligne et en continu ou pas. Elles consistent par exemple simplement à faire passer le fil de renforcement, à travers des filières de diamètre adapté, dans des têtes d'extrusion chauffées à des températures appropriées, ou encore dans un bain d'enduction contenant l'élastomère TPS et le PPE mis préalablement (ensemble ou séparément) en solution dans un solvant (ou mélange de solvants) organique approprié.

Selon un premier mode de réalisation préférentiel possible, le ou les fils de renforcement sont préalablement chauffés, par exemple par induction ou par rayonnement IR, avant passage dans les têtes d'extrusion respectives. En sortie de chaque tête d'extrusion, le ou les fils de renforcement ainsi gainés sont ensuite refroidis suffisamment de manière à solidifier la couche de polymère respective, par exemple avec de l'air ou un autre gaz froid, ou par passage dans un bain d'eau suivi d'une étape de séchage.

A titre d'exemple, le recouvrement d'un fil de renforcement de diamètre proche de 0,6 mm, par exemple d'un câble métallique constitué simplement de deux monofils élémentaires de diamètre 0,3 mm torsadés ensemble (comme illustré par exemple à la figure 2), par une première couche de polyamide 6-6 d'épaisseur maximale égale à environ 0,4 mm, pour l'obtention d'un fil de renforcement gainé ayant un diamètre total d'environ 1 mm, est réalisé sur une ligne d'extrusion-gainage comportant deux filières, une première filière (contre-filière ou filière amont) de diamètre égal à environ 0,65 mm et une seconde filière (ou filière aval) de diamètre égal à environ 0,95 mm, disposées toutes deux dans une tête d'extrusion portée à environ 300°C. Le polyamide, fondu à une température de 290°C dans l'extrudeuse, recouvre ainsi le fil de renforcement, par le biais de la tête de gainage, à une vitesse de défilement du fil égale typiquement à plusieurs dizaines de m/min, pour un débit de pompe d'extrusion typiquement de plusieurs dizaines de cm³/min. En sortie de ce premier gainage, le fil peut être immergé dans un bac de refroidissement rempli d'eau froide, pour solidifier et figer le polyamide dans son état amorphe, puis séché par exemple par passage de la bobine de réception à l'étuve.

Le fil ainsi recouvert de polyamide est ensuite recouvert de la composition comportant le PPE et l'élastomère TPS insaturé fonctionnalisé, selon un mode de réalisation adapté à l'épaisseur visée pour la deuxième couche.

A titre de premier exemple, dans le cas où l'épaisseur visée de la deuxième couche est de 0,1 mm environ, le fil recouvert de polyamide 6-6 peut être par exemple repassé à travers une ligne d'extrusion-gainage dans laquelle la tête de gainage est portée par exemple à une température de 230°C, et est équipée d'une première contre-filière de 1,1 mm de diamètre et d'une seconde filière de 1,2 mm de diamètre. Le mélange élastomère TPS insaturé fonctionnalisé et PPE peut être réalisé in situ, dans la deuxième tête d'extrusion, les deux composants étant alors apportés par exemple par deux trémies d'alimentation différente ; il peut être également utilisé sous forme d'un pré-mélange initial sous forme de granules. Ce mélange, porté par exemple à une température d'environ 220°C dans l'extrudeuse, recouvre ainsi le fil, par le biais de la tête de gainage, à une vitesse de défilement typiquement de quelques mètres à quelques dizaines de m/min, pour un débit de pompe d'extrusion typiquement de plusieurs cm³/min à plusieurs dizaines de cm³/min.

Pour les deux étapes de gainage successives décrites ci-dessus, le câble (fil de renforcement) est avantageusement préchauffé avant passage dans les têtes d'extrusion, par exemple par passage à travers un générateur HF ou à travers un tunnel chauffant.

A titre de deuxième exemple, dans le cas où l'épaisseur visée de la deuxième couche est très nettement inférieure, par exemple égale à quelques dizaines de nanomètre, le fil recouvert de polymère thermoplastique (par exemple polyamide 6-6) passe, par exemple à une vitesse de quelques m/min ou dizaines de m/min et sur une longueur de quelques cm ou dizaines de cm, entre deux feutrines de laine pressées par une masse de 1 kg et imbibées en continu par le mélange de PPE et d'élastomère TPS fonctionnalisé dilué (par exemple de 1 à 10%, de préférence de 1 à 5% en poids) dans un solvant organique approprié (de préférence du toluène), afin de recouvrir ainsi le tout d'une couche ultra-fine d'élastomère TPS (par exemple de SBS époxydé).

L'étape suivante consiste en un traitement thermo-oxydant destiné à solidariser au mieux les deux couches. Par traitement "thermo-oxydant" on entend par définition un traitement thermique en présence d'oxygène, par exemple de l'oxygène de l'air. Une telle étape permet d'obtenir une adhésion optimale de la deuxième couche TPS à la première couche du polymère thermoplastique ; par exemple, un traitement thermique sous vide s'est avéré insuffisant.

A l'issue de la seconde opération, par exemple directement en sortie de la tête de gainage ou du bain d'enduction (après évaporation du solvant dans le deuxième cas) précédemment décrits selon des modes de réalisation particuliers de l'invention, le fil composite traverse un four-tunnel, par exemple de plusieurs mètres de long, pour y subir un traitement thermique sous air.

Cette température de traitement est par exemple comprise entre 150°C et 300°C, pour des durées de traitement de quelques secondes à quelques minutes selon les cas, étant entendu que la durée du traitement sera d'autant plus courte que la température sera élevée, et que le traitement thermique ne doit évidemment pas conduire à une refusion ou même un ramollissement excessif des matières thermoplastiques utilisées.

Ainsi terminé, le renfort composite de l'invention est avantageusement refroidi, par exemple à l'air, pour éviter des problèmes de collage parasite lors de son enroulement sur la bobine de réception finale.

L'homme du métier saura ajuster la température et la durée du traitement en fonction des conditions particulières de mise en oeuvre de l'invention, notamment de la nature exacte du renfort composite fabriqué, notamment selon que l'on traite des monofilaments pris individuellement, des câbles constitués de plusieurs mono filaments ou des groupes de tels monofilaments ou câbles tels que des bandelettes.

En particulier, l'homme du métier aura avantage à réaliser des balayages en température et durée de traitement, de manière à rechercher, par approches successives, les conditions opératoires conduisant aux meilleurs résultats d'adhésion, pour chaque mode de réalisation particulier de l'invention.

Les étapes du procédé de l'invention précédemment décrites peuvent être avantageusement complétées par un traitement final de réticulation tridimensionnelle du renfort, plus exactement de sa seconde couche de composition, pour renforcer encore sa propre cohésion, notamment dans les cas où ce renfort composite est destiné à une utilisation ultérieure à une température relativement élevée, typiquement supérieure à 100°C.

Cette réticulation pourra être conduite par tout moyen connu, par exemple par des moyens de réticulation physiques tels que bombardement ionique ou électronique, ou par des moyens de réticulation chimiques, par exemple en introduisant un agent réticulant (e.g. huile de lin) dans la composition, par exemple au cours de son extrusion, ou encore en introduisant dans la composition un système de vulcanisation (i.e., à base de soufre).

Une réticulation pourra être également obtenue lors de la cuisson des bandages pneumatiques (ou plus généralement des articles en caoutchouc) que le renfort composite de l'invention est destiné à renforcer, grâce au propre système de réticulation présent dans les compositions de caoutchouc diénique constitutives de tels bandages (ou articles) et entrant au contact du renfort composite de l'invention.

Le renfort composite de l'invention est utilisable directement, c'est-à-dire sans nécessiter un quelconque système adhésif supplémentaire, comme élément de renforcement d'une matrice de caoutchouc diène, par exemple dans un bandage pneumatique. Il est avantageusement utilisable pour le renforcement de bandages pneumatiques de tous types de véhicules, en particulier véhicules tourisme ou véhicules industriels tels que Poids-lourd.

A titre d'exemple, la figure 5 annexée représente de manière très schématique (sans respect d'une échelle spécifique), une coupe radiale d'un bandage pneumatique conforme à l'invention pour véhicule du type tourisme.

Ce bandage pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits "radiaux", par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Ce bandage pneumatique 1 de l'invention a par exemple pour caractéristique essentielle qu'au moins une de ses armatures de sommet ou de carcasse comporte un renfort composite selon l'invention. Selon un autre exemple de mode de réalisation possible de l'invention, ce sont les tringles 5 qui pourraient être constituées d'un renfort composite selon l'invention.

### EXEMPLE DE REALISATION DE L'INVENTION

### Essai 1 - Fabrication des renforts composites

On fabrique tout d'abord des renforts composites, conformes ou non à l'invention, de la manière suivante. Le fil de renforcement de départ est un câble d'acier (dit "*steel cord*") pour bandages pneumatiques (acier standard à 0,7% en poids de carbone), de construction 1x2 constitué de deux fils élémentaires ou monofils de diamètre 0,30 mm retordus ensemble selon un pas d'hélice de 10 mm. Son diamètre est de 0,6 mm.

Le recouvrement de ce câble par du polyamide 6-6 ("ZYTEL E40 NC010" de la société DuPont de Nemours ; température de fusion Tf égale à environ 260°C) est réalisé sur une ligne d'extrusion-gainage par passage à travers une tête d'extrusion portée à une température de 300°C et comportant deux filières, une filière amont de diamètre 0,63 mm et une filière aval de diamètre 0,92 mm. Le polyamide porté à une température égale à environ 290°C dans l'extrudeuse (débit de pompe de 20 cm³/min) recouvre ainsi le fil (préchauffé à environ 280-290°C par passage à travers un générateur HF) défilant à une vitesse de 30 m/min. En sortie de la tête de gainage, le renfort composite obtenu est immergé en continu dans un bac de refroidissement rempli d'eau à 5°C pour le figer dans son état amorphe, puis séché par une buse d'air.

A ce stade de la fabrication, on obtient un renfort composite témoin (donc non conforme à l'invention) constitué du câble d'acier de départ gainé uniquement de sa première couche de polyamide. Ce renfort composite témoin (noté R-5) a un diamètre total (i.e., une fois gainé) d'environ 1,0 mm.

Puis, au cours d'une deuxième étape, on dépose sur le câble ainsi gainé une deuxième couche d'une composition comportant un mélange (rapport pondéral 1/0,3) d'élastomère thermoplastique SBS époxydé ("Epofriend AT501 de la société Daicel) et de PPE ("Xyron S202" de la société Asahi Kasei), deuxième couche dont l'épaisseur minimale (Eₘ₂) visée est égale à quelques dizaines de nanomètres, de la manière qui suit. Le câble recouvert de polyamide 6-6 est passé à travers un bain d'enduction, à une vitesse d'environ 4 m/min, sur une longueur d'environ 15 cm, entre deux feutrines de laine pressées par une masse de 1 kg et imbibées en continu par le mélange des deux polymères PPE et SBS époxydé, dilués respectivement à 1,5% et 5% en poids dans du toluène, afin de recouvrir ainsi le tout d'une couche ultra-fine de composition élastomère. Le renfort ainsi gainé est ensuite séché pour éliminer le solvant par évaporation.

Les températures de transition vitreuse, Tg₁, Tg₂ et Tg₃ des trois polymères utilisés ci-dessus sont respectivement égales à environ + 50°C, - 84°C et + 215°C (appareil DSC "822-2" de Mettler Toledo ; atmosphère Hélium ; échantillons préalablement portés de la température ambiante (20°C) à 100°C (20°C/min), puis refroidis rapidement jusqu'à - 140°C, avant enregistrement final de la courbe de DSC de - 140°C à + 300°C à 20°C/min).

A l'issue de ce deuxième gainage, on soumet l'ensemble (renfort composite doublement gainé) à un traitement thermo-oxydant d'une durée d'environ 100 s, par passage à 3 m/min dans un four-tunnel, sous atmosphère ambiante, porté à une température de 270°C. A ce stade final de la fabrication, on obtient un renfort composite conforme à l'invention, constitué du câble d'acier de départ gainé de sa première couche de polyamide et de sa deuxième couche de composition élastomère comportant l'élastomère TPS et le PPE. Le renfort composite conforme à l'invention ainsi préparé (renfort R-2 tel que schématisé à la figure 2) a un diamètre final voisin de 1,0 mm.

Dans l'essai ci-dessus, pour déterminer les meilleures conditions opératoires du traitement thermo-oxydant, on a réalisé préalablement un balayage en température de 160°C à 280°C, pour quatre durées de traitement (50 s, 100 s, 200 s et 400 s).

### Essai 2 - Tests d'adhésion

La qualité de la liaison entre le caoutchouc et les renforts composites précédemment fabriqués est ensuite appréciée par un test dans lequel on mesure la force nécessaire pour extraire les renforts d'une composition de caoutchouc vulcanisée, dit encore vulcanisat. Cette composition de caoutchouc est une composition conventionnelle utilisée pour le calandrage de nappes métalliques de ceinture de pneumatique, à base de caoutchouc naturel, de noir de carbone et des additifs usuels.

Le vulcanisat est un bloc de caoutchouc constitué de deux plaques de dimensions 200 mm par 4,5 mm et d'épaisseur 3,5 mm, appliquées l'une sur l'autre avant cuisson (l'épaisseur du bloc résultant est alors de 7 mm). C'est lors de la confection de ce bloc que les renforts composites (15 brins au total) sont emprisonnés entre les deux plaques de caoutchouc à l'état cru, à égale distance et en laissant dépasser de part et d'autre de ces plaques une extrémité de renfort composite de longueur suffisante pour la traction ultérieure. Le bloc comportant les renforts est alors placé dans un moule adapté puis cuit sous pression. La température et la durée de cuisson sont adaptées aux conditions de tests visées et laissées à l'initiative de l'homme de l'art ; à titre d'exemple, dans le cas présent, la cuisson du bloc est réalisée à 160°C pendant 15 min, sous une pression de 16 bars.

A l'issue de la cuisson, l'éprouvette ainsi constituée du bloc vulcanisé et des 15 renforts est mise en place dans les mâchoires d'une machine de traction adaptée pour permettre de tractionner chaque renfort isolément hors du caoutchouc, à une vitesse et une température données (par exemple, dans le cas présent, à 50 mm/min et 20°C). On caractérise les niveaux d'adhésion en mesurant la force dite d'arrachage (notée Fₘₐₓ) pour arracher les renforts de l'éprouvette (moyenne sur 15 tractions).

De manière inattendue, on a constaté que le renfort composite de l'invention, malgré le fait qu'il soit dépourvu de colle RFL, présentait une force d'arrachage Fₘₐₓ à 20°C particulièrement élevée, puisque augmenté de 70% par rapport à la force d'arrachage de référence mesurée sur le renfort composite témoin gainé de nylon (R-5) et encollé avec la colle conventionnelle RFL.

Dans les mêmes conditions, le renfort composite témoin (R-5) gainé de nylon mais dépourvu de colle RFL (ou toute autre colle), présentait une adhésion nulle au caoutchouc (force d'arrachage égale pratiquement à zéro).

En conclusion, le renfort composite de l'invention constitue une alternative particulièrement intéressante, compte tenu des très hauts niveaux d'adhésion obtenus, aux renforts composites de l'art antérieur gainés par une matière thermoplastique telle que polyamide ou polyester, nécessitant de manière connue l'emploi d'une colle du type RFL pour assurer leur adhésion au caoutchouc.

## Revendications

1. Renfort composite (R-1 ; R-2 ; R-3) comportant :
- un ou plusieurs fil(s) de renforcement (10 ; 20 ; 30) ;
- recouvrant individuellement ledit fil (10 ; 20 ; 30), chaque fil (10 ; 20 ; 30) ou collectivement plusieurs fils (10 ; 20 ; 30), une première couche (11 ; 21 ; 31) d'un polymère thermoplastique dont la température de transition vitreuse est positive ;
**caractérisé en ce que** le renfort composite comporte, recouvrant la première couche (11 ; 21 ; 31), une deuxième couche (12 ; 22 ; 32) d'une composition comportant un poly(p-phénylène éther) - en abrégé PPE - et un élastomère thermoplastique styrénique insaturé fonctionnalisé, dont la température de transition vitreuse est négative, ledit élastomère étant porteur de groupes fonctionnels choisis parmi les groupes époxyde, carboxyle, anhydride ou ester d'acide.

2. Renfort (R-1 ; R-2 ; R-3) selon la revendication 1, dans lequel la température de transition vitreuse du polymère thermoplastique est supérieure à +20°C.

3. Renfort (R-1 ; R-2 ; R-3) selon la revendication 1 ou 2, dans lequel la température de transition vitreuse de l'élastomère thermoplastique styrénique insaturé est inférieure à - 20°C.

4. Renfort (R-1 ; R-2 ; R-3) selon l'une quelconque des revendications 1 à 3, dans lequel le polymère thermoplastique est un polyamide aliphatique ou un polyester, de préférence un polyamide 6-6.

5. Renfort (R-1 ; R-2 ; R-3) selon l'une quelconque des revendications 1 à 4, dans lequel le poly(p-phénylène éther) a une température de transition vitreuse supérieure à 150°C, de préférence supérieure à 180°C.

6. Renfort (R-1 ; R-2 ; R-3) selon l'une quelconque des revendications 1 à 5, dans lequel le poly(p-phénylène éther) est le poly(2,6-diméthyl-1,4-phénylène-éther).

7. Renfort (R-1 ; R-2 ; R-3) selon l'une quelconque des revendications 1 à 6, dans lequel l'élastomère thermoplastique styrénique insaturé est un copolymère comportant des blocs styrène et des blocs diène.

8. Renfort (R-1 ; R-2 ; R-3) selon la revendication 7, dans lequel les blocs diène sont des blocs isoprène ou butadiène.

9. Renfort (R-1 ; R-2 ; R-3) selon la revendication 8, dans lequel l'élastomère thermoplastique styrénique insaturé est choisi dans le groupe constitué par les copolymères blocs styrène/ butadiène (SB), styrène/ isoprène (SI), styrène/ butadiène/ butylène (SBB), styrène/ butadiène/ isoprène (SBI), styrène/ butadiène/ styrène (SBS), styrène/ butadiène/ butylène/ styrène (SBBS), styrène/ isoprène/ styrène (SIS), styrène/ butadiène/ isoprène/ styrène (SBIS) et les mélanges de ces copolymères.

10. Renfort (R-1 ; R-2 ; R-3) selon la revendication 9, dans lequel l'élastomère thermoplastique styrénique insaturé est choisi dans le groupe constitué par les copolymères blocs SB, SI, SBS, SIS et les mélanges de ces copolymères, de préférence un élastomère SBS.

11. Renfort (R-1 ; R-2 ; R-3) selon l'une quelconque des revendications 1 à 10, dans lequel l'élastomère thermoplastique styrénique insaturé est un élastomère époxydé.

12. Renfort (R-1 ; R-2 ; R-3) selon l'une quelconque des revendications 1 à 11, dans lequel le taux pondéral de poly(p-phénylène éther), dans la composition élastomère de la deuxième couche, représente entre 0,05 et 5 fois, de préférence entre 0,1 et 2 fois le taux pondéral de styrène présent dans l'élastomère thermoplastique styrénique insaturé.

13. Renfort (R-1 ; R-2 ; R-3) selon l'une quelconque des revendications 1 à 12, dans lequel le fil (10 ; 20 ; 30) de renforcement est un fil métallique.

14. Bandage pneumatique (1) comportant un renfort composite (R-1 ; R-2 ; R-3) selon l'une quelconque des revendications 1 à 13.

15. Procédé de fabrication d'un renfort composite (R-1 ; R-2 ; R-3) susceptible d'adhérer à une matrice de caoutchouc diénique, le procédé comportant au moins les étapes suivantes :
- on recouvre un fil ou plusieurs fils (10 ; 20 ; 30) de renforcement par une couche (11 ; 21 ; 31) de polymère thermoplastique dont la température de transition vitreuse est positive ;
**caractérisé en ce que** le procédé comporte au moins les étapes suivantes :
- on dépose individuellement sur ledit fil (10 ; 20 ; 30), chaque fil ou collectivement sur plusieurs fils (10 ; 20 ; 30) ainsi recouvert(s) une deuxième couche (12 ; 22 ; 32) d'une composition comportant un poly(p-phénylène éther) - en abrégé PPE - et un élastomère thermoplastique styrénique insaturé fonctionnalisé, dont la température de transition vitreuse est négative, ledit élastomère étant porteur de groupes fonctionnels choisis parmi les groupes époxyde, carboxyle, anhydride ou ester d'acide ;
- on soumet l'ensemble à un traitement thermo-oxydant pour solidariser les deux couches.

## Patentansprüche

1. Verbundverstärkung (R-1; R-2; R-3), umfassend:
- einen oder mehrere Verstärkungsfäden (10; 20; 30;
- eine den Faden (10; 20; 30) bzw. jeden Faden (10; 20; 30) einzeln bzw. mehrere Fäden (10; 20; 30) zusammen bedeckende erste Schicht (11; 21; 31) aus einem thermoplastischen Polymer, dessen Glasübergangstemperatur positiv ist,
**dadurch gekennzeichnet, dass** die Verbundverstärkung eine die erste Schicht (11; 21; 31) bedeckende zweite Schicht (12; 22; 32) aus einer Zusammensetzung, die einen Poly(p-phenylenether) mit der Abkürzung PPE und ein funktionalisiertes ungesättigtes thermoplastisches Styrolelastomer, dessen Glasübergangstemperatur negativ ist, umfasst, wobei das Elastomer aus Epoxid-, Carboxyl-, Anhydrid- oder Säureestergruppen ausgewählte funktionelle Gruppen trägt, umfasst.

2. Verstärkung (R-1; R-2; R-3) nach Anspruch 1, wobei die Glasübergangstemperatur des thermoplastischen Polymers größer als +20°C ist.

3. Verstärkung (R-1; R-2; R-3) nach Anspruch 1 oder 2, wobei die Glasübergangstemperatur des ungesättigten thermoplastischen Styrolelastomers kleiner als -20°C ist.

4. Verstärkung (R-1; R-2; R-3) nach einem der Ansprüche 1 bis 3, wobei es sich bei dem thermoplastischen Polymer um ein aliphatisches Polyamid oder einen Polyester, vorzugsweise ein Polyamid 6-6 handelt.

5. Verstärkung (R-1; R-2; R-3) nach einem der Ansprüche 1 bis 4, wobei der Poly(p-phenylenether) eine Glasübergangstemperatur von mehr als 150°C und vorzugsweise mehr als 180°C aufweist.

6. Verstärkung (R-1; R-2; R-3) nach einem der Ansprüche 1 bis 5, wobei es sich bei dem Poly(p-phenylenether) um Poly(2,6-dimethyl-1,4-phenylenether) handelt.

7. Verstärkung (R-1; R-2; R-3) nach einem der Ansprüche 1 bis 6, wobei es sich bei dem ungesättigten thermoplastischen Styrolelastomer um ein Copolymer mit Styrolblöcken und Dienblöcken handelt.

8. Verstärkung (R-1; R-2; R-3) nach Anspruch 7, wobei es sich bei den Dienblöcken um Isopren- oder Butadienblöcke handelt.

9. Verstärkung (R-1; R-2; R-3) nach Anspruch 8, wobei das ungesättigte thermoplastische Styrolelastomer aus der Gruppe bestehend aus Styrol/Butadien(SB)-, Styrol/Isopren(SI)-, Styrol/Butadien/Butylen-(SBB)-, Styrol/Butadien/Isopren(SBI)-, Styrol/Butadien/Styrol(SBS)-, Styrol/Butadien/Butylen/Styrol(SBBS)-, Styrol/Isopren/Styrol(SIS)-, Styrol/Butadien/Isopren/Styrol(SBIS)-Blockcopolymeren und Mischungen dieser Copolymere ausgewählt ist.

10. Verstärkung (R-1; R-2; R-3) nach Anspruch 9, wobei das ungesättigte thermoplastische Styrolelastomer aus der Gruppe bestehend aus SB-, SI-, SBS-, SIS-Blockcopolymeren und Mischungen dieser Copolymere, vorzugsweise einem SBS-Elastomerr,ausgewählt ist.

11. Verstärkung (R-1; R-2; R-3) nach einem der Ansprüche 1 bis 10, wobei es sich bei dem ungesättigten thermoplastischen Styrolelastomer um ein epoxidiertes Elastomer handelt.

12. Verstärkung (R-1; R-2; R-3) nach einem der Ansprüche 1 bis 11, wobei der Gewichtsanteil an Poly(p-phenylenether) in der Elastomerzusammensetzung der zweiten Schicht zwischen dem 0,05- und 5-Fachen und vorzugsweise zwischen dem 0,1- und 2-Fachen des Gewichtsanteils an Styrol in dem ungesättigten thermoplastischen Styrolelastomer liegt.

13. Verstärkung (R-1; R-2; R-3) nach einem der Ansprüche 1 bis 12, wobei es sich bei dem Verstärkungsfaden (10; 20; 30) um einen Metallfaden handelt.

14. Luftreifen (1), umfassend eine Verbundverstärkung (R-1; R-2; R-3) nach einem der Ansprüche 1 bis 13.

15. Verfahren zur Herstellung einer Verbundverstärkung (R-1; R-2; R-3), die an einer Dienkautschukmatrix haften kann, wobei das Verfahren mindestens die folgenden Schritte umfasst:
- man bedeckt einen Verstärkungsfaden oder mehrere Verstärkungsfäden (10; 20; 30) mit einer Schicht (11; 21; 31) aus thermoplastischem Polymer, dessen Glasübergangstemperatur positiv ist;
**dadurch gekennzeichnet, dass** das Verfahren mindestens die folgenden Schritte umfasst:
- man scheidet auf dem so bedeckten Faden (10; 20; 30) bzw. jedem so bedeckten Faden einzeln oder auf mehreren so bedeckten Fäden (10; 20; 30) zusammen eine zweite Schicht (12; 22; 32) aus einer Zusammensetzung, die einen Poly(p-phenylenether) mit der Abkürzung PPE und ein funktionalisiertes ungesättigtes thermoplastisches Styrolelastomer, dessen Glasübergangstemperatur negativ ist, umfasst, wobei das Elastomer aus Epoxid-, Caboxyl-, Anhydrid- oder Säureestergruppen ausgewählte funktionelle Gruppen trägt, ab;
- man unterwirft das Ganze einer thermooxidativen Behandlung, um die beiden Schichten fest miteinander zu verbinden.

## Claims

1. Composite reinforcer comprising:
- one or more reinforcing thread(s);
- a first layer of a thermoplastic polymer, the glass transition temperature of which is positive, covering individually said thread or each thread or collectively several threads;
- a second layer of a composition comprising a poly(*p*-phenylene ether) (- in an abbreviated form PPE-) and a functionalized unsaturated thermoplastic styrene elastomer, the glass transition temperature of which is negative, said elastomer bearing functional groups selected from epoxide, carboxyl, acid anhydride and acid ester groups, covering the first layer.

2. Reinforcer according to Claim 1, in which the glass transition temperature of the thermoplastic polymer is greater than +20°C.

3. Reinforcer according to Claim 1 or 2, in which the glass transition temperature of the unsaturated thermoplastic styrene elastomer is lower than - 20°C.

4. Reinforcer according to any one of Claims 1 to 3, in which the thermoplastic polymer is an aliphatic polyamide or a polyester, preferably a 6,6 polyamide.

5. Reinforcer according to any one of Claims 1 to 4, in which the poly(p-phenylene ether) has a glass transition temperature greater than 150°C, preferably greater than 180°C.

6. Reinforcer according to any one of Claims 1 to 5, in which the poly(p-phenylene ether) is poly(2,6-dimethyl-1,4-phenylene ether).

7. Reinforcer according to any one of Claims 1 to 6, in which the unsaturated thermoplastic styrene elastomer is a copolymer comprising styrene blocks and diene blocks.

8. Reinforcer according to Claim 7, in which the diene blocks are isoprene or butadiene blocks.

9. Reinforcer according to Claim 8, in which the unsaturated thermoplastic styrene elastomer is selected from the group consisting of styrene/butadiene (SB), styrene/isoprene (SI), styrene/butadiene/ butylene (SBB), styrene/butadiene/isoprene (SBI), styrene/butadiene/styrene (SBS), styrene/ butadiene/butylene/styrene (SBBS), styrene/isoprene/styrene (SIS), styrene/butadiene/ isoprene/styrene (SBIS) block copolymers and blends of these copolymers.

10. Reinforcer according to Claim 9, in which the unsaturated thermoplastic styrene elastomer is selected from the group consisting of SB, SI, SBS, SIS block copolymers and blends of these copolymers, preferably an SBS elastomer.

11. Reinforcer according to any one of Claims 1 to 10, in which the unsaturated thermoplastic styrene elastomer is an epoxidized elastomer.

12. Reinforcer according to any one of Claims 1 to 11, in which the weight content of the poly(*p*-phenylene ether) in the elastomer composition of the second layer represents between 0.05 and 5 times, preferably between 0.1 and 2 times, the weight content of styrene present in the unsaturated thermoplastic styrene elastomer.

13. Reinforcer according to any one of Claims 1 to 12, in which the reinforcing thread is a metal wire.

14. Pneumatic tyre comprising a composite reinforcer according to any one of Claims 1 to 13.

15. Process for manufacturing a composite reinforcer capable of adhering to a diene rubber matrix, **characterized in that** it comprises at least the following steps:
- one or more reinforcing threads is/are covered by a layer of the thermoplastic polymer having a positive glass transition temperature;
- a second layer of a composition comprising a poly(*p*-phenylene ether) (- in an abbreviated form PPE-) and a functionalized unsaturated thermoplastic styrene elastomer, the glass transition temperature of which is negative, said elastomer bearing functional groups selected from epoxide, carboxyl, acid anhydride and acid ester groups, is deposited individually on said thread or each thread or collectively on several threads thus covered; and
- the assembly undergoes a thermo-oxidative treatment in order to bond the two layers together.
